# EUROPEAN PATENT APPLICATION

(11) **EP 1 909 193 A1**
(43) Date of publication of application: **09.04.2008**
(21) Application number: 06020781.8
(22) Date of filing: 03.10.2006
(51) Int. Cl.: G06F 17/30

(54) **Proximity based query scoping for information searches**

(71) Applicant: INuron BVBA, 3210 Lubbeek (BE)
(72) Inventor: Belpaire, Jorre, Herwig, Theo, 3210 Lubbeek (BE); Cloetens, Johan, 3010 Kessel-Lo (BE)
(74) Representative: Plas, Axel Ivo Michel

(57) **Abstract**

In order to efficiently search information in a data network, a context based query is constructed, proximity parameter values are associated with data containers in the data network, and a proximity criterion is defined for selecting the data containers wherein the information will be searched. The query is launched only against those data containers whose proximity parameter value satisfies the proximity criterion.

## Description

### Field of the Invention

The present invention generally relates to scoping of queries used for information retrieval in a data network such as the world wide web (www), a wide area network (WAN), local area network (LAN), a peer-to-peer network, etc. Scoping a search query is the art of restricting the data sources or data containers against whom the query will be launched. For sake of clarity, it is noticed that within the context of the present patent application, a data source can contain one or more data containers, each data container representing a set of data or information from a data owner. The data owner can be any physical or legal entity, or a group of physical or legal entities, such as a single person, a group of persons (e.g. a club administration), a company, an organisation, etc.

### Background of the Invention

Traditional systems for searching information such as Internet browsers like Google and Yahoo, enable the searcher to define a context based query, i.e. a boolean or logical string of keywords, phrases, etc. indicative for the information that is searched. The traditional systems thereafter enable to launch the query against all data sources in the network or, in case of peer-to-peer networks, also against a single data source which is known to contain the searched information. In peer-to-peer networks this knowledge is obtained by first collecting information from the entire network on the location of data and eventually on the bandwidth availability on links. In case the query is launched against all available data sources, query execution is slow and resource consuming, and the search results are voluminous and rather noisy, i.e. a lot of search results appear to be irrelevant to the searcher. Further, the information contained in the search results is not always reliable since it may originate from whatever available data source. Launching the query against a single data source requires knowledge by the searcher of the location of the information, and can only be implemented in peer-to-peer networks. Summarizing, the traditional information search systems do not support query scoping or support query scoping only after having contacted all data sources first. In order to reduce the noise on search results, traditional search systems are extended with search result ranking mechanisms and/or filters. These ranking mechanisms and/or filters however do not improve the efficiency of the information retrieval, i.e. they further slow down the presentation of search results to the searcher, and they do not reduce the impact on resource consumption such as bandwidth occupancy in the data network as a result of query execution.

A prior art solution that suggests query scoping in order to increase efficiency and performance of information retrieval is described in US Patent Application US 2004/0210560 entitled "Method and System for Searching a Wide Area Network". According to this patent application, information that has been selected previously by users of the system is stored in memory, and the searcher entering a new search query has the ability to select a set of information from the memory against which the query is launched. This way, the time and processing power required by the search engine to execute the query are reduced.

The solution described in US 2004/0210560 restricts the searcher to launching new queries against previously consulted information. The proposed mechanism for improving search efficiency consequently will fail when rarely consulted information is searched or when very recent, not yet consulted information is searched for the first time. In addition, this prior art solution does not improve the reliability of the retrieved information since the search results, although already consulted before, may still originate from whatever data source in the wide area network. The memory basically represents a cache for consulted information that can be searched partially.

In the International Patent Application WO 90/08360 entitled "System and Method for Retrieving Information from a Plurality of Databases", the searcher enters a search request and an area of interest in order to obtain information from a large number of commercial databases. A central computer launches the search request only against databases that are associated with the searcher's area of interest. Alternatively, the searcher may select one or more particular databases against which the search request is launched, and the central computer adapts the command set for the selected databases. This way, effectiveness of commercial database consultation is increased and costs are rationalized by limiting the number of retrieved postings.

The system disclosed in WO 90/08360 is restricted to searching commercial databases and the scoping described therein is limited to scoping on the basis of the searcher's area of interest. By restricting the search to databases selected on the basis of the searcher's area of interest, efficiency is improved, but reliability of the retrieved information is not since the information may be retrieved from whatever database that is advertised to contain information in the area of interest of the searcher. Further, the system of WO 90/08360 requires the data sources to publish in one way or the other to the central computer information indicative for the covered area's to enable the central computer to select the databases when a new query has to be executed. This additional complexity can be implemented in a network of commercial databases but is hard to introduce in wide area networks such as the Internet where the number of data sources is growing daily. In a second embodiment where the searcher selects the databases, the searcher is supposed to know which database contains what information requiring similar functionality enabling the databases to advertise their contents. Other databases than the one(s) explicitly selected won't be searched.

A system with similar characteristics and drawbacks is described in the article "Searching Dynamic Communities with Personal indexes" from the authors Alexander Löser, Christoph Tempich, Bastian Quilitz, Wolf-Tilo Balke, Steffen Staab and Wolfgang Nejdl. Through an index mechanism, each peer's expertise is known. Finding information is confined to matching the search query against the expertise of the peers, and selecting a subset of peers whereto the query is forwarded. The complexity issue is similar to that of WO 90/08360, and also the reliability of the retrieved information remains uncertain.

International Patent Application WO 2006/036186 entitled "Collections of Linked Databases" describes a way for reliable social network data collection through a mechanism to determine directionality in searching collections of databases and social networks. The mechanism consists in establishing a social network path from the searcher to a person/data owner identified in a website by using a social network path from an existing social network map. The mechanism's applicability is limited since it relies on the existence of linked databases and existing social network maps that can be consulted.

It is an objective of the present invention to provide a method and system for searching information in a data network which resolves the above mentioned shortcomings of the prior art solutions. In particular, it is an objective of the present invention to increase the efficiency of query execution, to optimize the resource consumption over the data sources and the data network, to reduce the noise in the search results, and to improve the reliability of the retrieved data. It is further an objective of the invention to optimally take benefit of the searcher's knowledge of where the searched information could reside. In addition, the invention aims to be widely applicable, i.e. in different types of networks such as wide area networks, peer-to-peer networks, private networks, etc.

### Summary of the Invention

According to the present invention, the above objectives are realized by the method for searching information in a data network defined by claim 1. This method comprises the characterizing steps of associating proximity parameter values with data containers in the data network, defining a proximity criterion for data containers wherein the information has to be searched, determining at least one data container in the data network whose proximity parameter value satisfies the proximity criterion; and launching the context based query only against the at least one data container whose proximity parameter value satisfies the proximity criterion.

Thus, the current invention introduces the use of the proximity, i.e. the relation or distance between the data container (or owner of the data container) and the searcher, in order to scope the search query. The proximity is tested against a criterion to determine the data containers that will be searched. By scoping the search query in such a way that the query is launched only against data containers that satisfy a certain proximity criterion, the number of data sources against which the search query is launched is obviously limited. As a result, the average return time lowers and search results are faster available. Also, the traffic generation is reduced leading to better performance under given bandwidth capacity constraints in the data network. An important advantage realized through the current invention therefore is the increase in efficiency and performance, resulting in faster response time and optimized resource consumption in the data network and data sources that harbour the data containers.

As will be explained in more detail further in this patent application, the proximity criterion can for instance represent an emotional, behavioural, professional, physical, or data usage affinity between the searcher and the owner(s) of the data containers that will be searched. As a consequence, the returned information will be less noisy, and the searcher can match the reliability of the retrieved information to his/her relation with the data owner(s). In other words, an additional achievement of the present invention is that the quality and reliability of searches are increased significantly, resulting in more relevant and more reliable search results.

In addition to the method defined by claim 1, the present invention relates to a computer-implemented system for searching information in a data network as defined by claim 15. This computer-implemented system contains the software, hardware or a combination of both to execute the steps of the method according to the present invention.

A first optional feature of the method and system according to the present invention is that the proximity parameter value associated with a data container may be determined on the basis of a relation between the data owner of that data container and the searcher. This optional feature is defined by claim 2.

The data owner is a physical or legal person, or a group of persons that has information and makes this information available through a data source. It is noted that a single data source may contain information from different data owners. The data source may contain several logical portions or containers of data, each container containing information from a single or number of data owners. The searcher may potentially be a data owner but not necessarily needs to be so. The relation between the data searcher and the data owner(s) of a data container may be expressed through a proximity index, e.g. a numerical value representative for the relational distance between searcher and data owner, entered manually by the searcher or automatically through an algorithm. Alternatively, the relation between data searcher and data owner may be selected out of a predefined set of proximity levels, e.g. "my family", "my friends", "my professional or work relations", ..., up to a level that represents the entire set of available data sources through private or public networks, named for instance "my world".

It is noticed that in certain embodiments of the current invention, data containers from the same data owner may have a different proximity value.

This way, the searcher can restrict the search to data containers of data owners that have a certain relation or proximity to the searcher. When the searcher is looking for pictures of a holiday trip made with family, he can for instance scope the query to data containers from his family members only. Such restriction will significantly enhance the efficiency of the search without risking to miss any relevant results, since optimal advantage is taken of the searcher's knowledge of the location of the information he or she is looking for.

A further optional feature, defined by claim 3, is that the relation between data owner and searcher may correspond to an emotional affinity.

This way, the searcher may scope the query such that the search remains restricted to information containers from data owners where he/she has a certain emotional bond with. In this case, the proximity advantageously is an index which is manually set by the data searcher for each data owner that makes information available to the searcher.

An alternative optional feature, defined by claim 4, is that the relation between data owner and data searcher may correspond to a behavioural affinity.

Thus, query scoping may result in searching only data containers from data owners that use or make available the same type of data as the searcher. The behavioural affinity may be calculated automatically and the proximity parameter value representing the relation between data owner and data searcher may be set automatically through an algorithm that monitors data usage in the network. In cases where the behavioural affinity serves as a proximity index, the proximity value may differ for different containers from one owner.

Another alternative optional feature, defined by claim 5, is that the relation between data owner and data searcher may correspond to a professional affinity.

An advantage of such an implementation of the current invention is that information from professional online networking communities like Linkedln, Ryze, Tribe.net, etc. can be used to automatically calculate or generate the proximity between data searcher and data owner. The search query than may be scoped to include only data containers from professional relations to the searcher. Again, efficiency of the search will have improved significantly since advantage is taken of the searcher's pre-knowledge that the information is to be found amongst his/her professional relations.

Still another alternative optional feature, defined by claim 6, is that the relation between data owner and data searcher may correspond to a physical affinity.

Thus, executing the search query may be restricted to information that is made available by data owners that have a certain blood band with the searcher, e.g. direct relatives, indirect second grade relatives, etc.

As a further alternative, defined by claim 7, the relation between data owner and data searcher may correspond to a data usage pattern affinity.

This implies that the way wherein data are used by respectively the searcher and the various data owners, for instance the timing, the contents, the frequency or sequence of searching data, etc. may be deterministic for selecting the data containers that will be searched. The relation between data usage pattern of the searcher and data owner can be generated or calculated automatically.

Another optional element of the method for searching information according to the present invention is that the proximity parameter value may correspond to a numerical value entered manually or automatically through an algorithm. This feature is defined by claim 8.

Indeed, the proximity or affinity between the searcher and data owner(s) whose data containers will be searched can be quantified into a numerical value. This numerical value can be entered manually by the data searcher each time a new data owner makes available information. Manually entering the proximity parameter values however requires discipline and consistency. Alternatively, automated calculation and maintenance of the proximity parameter values is feasible through a software algorithm. For instance, the proximity between a data searcher and data owner may be calculated on the basis of the relation between the data collection made available by the data searcher and the data collection made available by the data owner. A software algorithm can for instance determine to what extend two documents deal with the same topic or contain overlapping subject-matter. The correlation between the documents made available by the data searcher and data owner can then be used to quantify the proximity between the data searcher and data owner. An automated process to determine the proximity between data searchers and data owner is advantageous in that it is systematic and less error-prone than the manual process, but it adds complexity to the system.

Another optional feature of the method for searching information according to the present invention, defined by claim 9, is that the proximity parameter value may correspond to a position of the data owner in a proximity map, either entered manually by the searcher or automatically through an algorithm.

Indeed, instead of a numerical value, the proximity index between data searcher and data owner may be derived from a proximity map, e.g. a social network map, depicting how close the data searcher and data owner are related to one another. The proximity map can be set up in many ways, and again, the proximity between data searcher and data owner may be entered manually, e.g. by the searcher positioning a data owner on the map though a drag-and-drop operation on a screen, or it can be entered automatically through a software algorithm that calculates the proximity between data searcher and data owner and positions the data owner on the map.

Optionally, as defined by claim 10, the proximity map may correspond to a concentric map wherein the searcher represents the centre.

This way, the proximity between the data searcher and data owner is expressed through a number of gradually increasing levels, where the next level comprises all underlying levels. Such a concentric proximity map wherein the centre represents the data searcher and each concentric circle represents another proximity level is easy to interpret, making it easy to the data searcher to scope the query.

In a particular embodiment of the method according to the present invention the proximity criterion may comprise an upper limit for the proximity parameter value. This embodiment is defined by claim 11.

This way, the query will be scoped to all data containers whose proximity index is smaller than the upper limit. Data containers whose proximity index is larger than the upper limit will be excluded from the search.

In a variant embodiment of the present invention, defined by claim 12, the proximity criterion may comprise a range of acceptable values for the proximity parameter value.

This way, the query will be scoped to all data containers whose proximity index is within a certain range. The range can be defined by an upper limit and lower limit in case the proximity parameter value corresponds to a single numerical value, or it may be a more complex definition like a zone within a proximity map. Data containers whose proximity parameter value is outside the given range will not be searched.

It is noted that the granularity of the proximity parameter may go to the level of a single relation between a data owner and data searcher. In embodiments of the invention where this is not the case, the data searcher may have the possibility to add or remove individual data containers from the query scope to further enhance the efficiency and performance of the search, and/or to improve the reliability of the search results.

Another remark is that the proximity parameter values that express the relation between the data containers (or owners thereof) and the data searcher might be dynamic. The network of the data searcher, e.g. the social or professional network, will change continuously. Data owners may get closer to or more distant from the data searcher, depending on the actual relation with the data searcher and eventually also on the chosen algorithm to determine the proximity to the data searcher.

As is indicated by claims 13 and 14, the method for searching information according to the present invention is widely applicable, e.g. in wide area networks, the Internet or world wide web, in local area networks like a private corporate LAN, in peer-to-peer networks, etc.

### Brief Description of the Drawings

Fig. 1 is a first scheme illustrating the basic principle of the method and system for searching information according to the present invention;
Fig. 2 is a second scheme illustrating the basic principle of the method and system for searching information according to the present invention;
Fig. 3 is a first diagram illustrating a first embodiment of the system according to the present invention, more particularly a first instantiation of the invented search method therein;
Fig. 4 is a second diagram illustrating the first embodiment of the system according to the present invention, more particularly a second instantiation of the invented search method therein;
Fig. 5 is a third diagram illustrating the first embodiment of the system according to the present invention, more particularly a third instantiation of the invented search method therein;
Fig. 6 is a diagram illustrating a second embodiment of the system according to the present invention; and
Fig. 7 illustrates a menu structure that is used in the graphical user interface of a third embodiment of the system according to the present invention.

### Detailed Description of Embodiment(s)

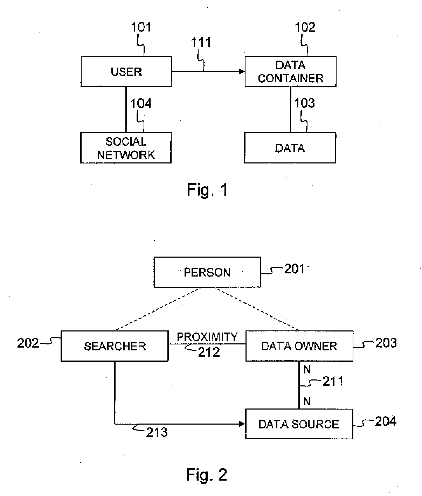

The current invention enables launching a search query against a subset of available data containers and is no longer an all-or-one search mechanism wherein the search query is matched either against all available data sources or alternatively against a single selected data source. The subset of data containers that will be searched is determined by the proximity of the data container or its owner to the searcher. Fig. 1 illustrates that a user 101 is able to set the proximity of the quested data 103 on his social network topology 104. Only data containers like 102 that satisfy the proximity criterion will be searched. This is indicated by arrow 111 in Fig. 1.

A characteristic of a data owner belonging to the searcher's social network 104, is his proximity to the searcher. This proximity can be expressed as a proximity index, a proximity level, a proximity vector, etc. whose value is set by the user 101 searching for information within his social network 104, or alternatively set by an algorithm calculating the proximity between the data owner and the searcher. When the user 101 is building a search query by entering the context of the searched information e.g. through keywords, a proximity criterion is used to select the subset of data containers where the query will be matched against. The query is launched only against the subset of data containers that fall within the specified proximity criterion.

Fig. 2 further illustrates an example system according to the present invention wherein the proximity 212 between the data searcher 202 and the data owner(s) 203 is introduced to scope the search query. As is indicated by the dashed line interconnecting 201 and 203, the data owner 203 is a physical or legal person who owns information and makes the information available through a data source. The data source is for instance a server, a storage disk, a database, etc that can contain information from different data owners. A data source therefore is subdivided in logical zones, named data containers, that contain information from respective data owners. In Fig. 2, the N-N link 211 between data owner 203 and data source 204 makes explicit that plural data owners can make information available through a single data source, and the information of a data owner can be spread over several data containers that form part of one or plural data sources. As is indicated by the dashed line between 201 and 202, the searcher is also a physical or legal person and consequently a potential data owner himself. The relation 212 between the searcher 202 and the data owner(s) 203 is translated into a proximity index that reflects how close the data owner(s) 203 is/are related to the searcher 202. This relation can be defined in different ways. The emotional affinity or personal interpretation of the searcher 202 as to how close his emotional bond with the respective data owner 203 is, can serve as a measure enabling the searcher 202 to manually quantify the proximity to the data owner 203. Alternatively, the behavioural affinity or similarity in data usage pattern between the searcher 202 and data owner 203 can be used to quantify the relation 212 between the searcher 202 and data owner 203. The extend to which the searcher 202 and data owner 203 use the same type of data can for instance be monitored by a software algorithm which further automatically generates and calculates the proximity index. Another alternative could be the data owner affinity or the overlap between the data collection made available by the searcher 202 and the data owner 203. An algorithm for instance can determine the amount of relatives between the searcher 202 and data owner 203, i.e. the amount of documents that deal about the same topic or subject. Again, the amount of relatives, eventually combined with the extend to which the relatives match, can serve as a tool to automatically calculate the proximity between searcher 202 and data owner 203. Other examples of proximity parameters are the professional affinity, e.g. determined through online networking communities such as Linkedln, Ryze, Tribe.net, etc, the physical affinity in case of a blood band between the searcher 202 and data owner 203, etc. When searching information, the query of searcher 202 will be launched only against data sources 204 that contain data containers from data owners 204 whose proximity relation 212 to the searcher 202 satisfies a certain criterion. The criterion may for instance be an upper level which should not be exceeded.

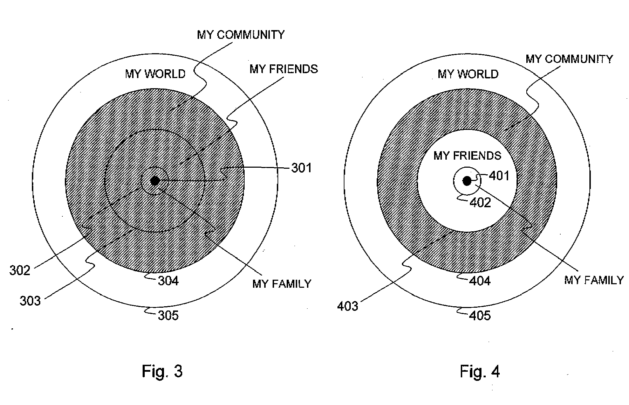

In certain embodiments of the invention, the proximity parameter value can be derived from a social network map, depicting how close data owner(s) and searcher are related. The social network map in other words shows the affinity between a particular person, the searcher, and his environment. Fig. 3 for instance shows a scheme wherein the searcher represents the centre 301 of a concentric social network map. The proximity index, i.e. the distance to the centre, is grouped in levels. In the example shown in Fig. 3, a social network map based on emotional affinity has the following levels: "Me" or 301 represents the centre, "My Family" or 302, "My Friends" or 303, "My Community" or 303, and "My World" or 305. Each time a new data container is made available to the data searcher; an algorithm will position that data container or its owner on the map based on the owner-searcher relation. The position on the map is dynamic. A data owner may become closer or more distant related to the searcher, and/or the algorithm building the map may give a different interpretation to the relation.

When the searcher is looking for data, for instance a particular work related report, the searcher will build a query based on the context in which the report was generated. For instance, a query based on keywords may indicate that the searcher is looking for a report relating to "Sales", "Quarter Results", "2005". Next, the searcher shall determine the scope of the query. Through a proximity criterion, the searcher in Fig. 3 sets the upper level of the proximity index to the third level. Knowledge that the searched report is to be found amongst the data made available by his professional contacts, is exploited by the searcher to restrict the search to data containers from owners that are within his community. The data from owners that are outside the "My Community" or 304 level will not be searched. Finally, the query is launched with the scope. The scope is translated into a list of data containers against which the query will be launched. The searcher perceives the query as being launched against a group of people or data owners within his community. These data owners may be the searcher himself, his family, his friends, and his community, the latter being assumed to contain his work relations. All data containers outside this scope such as public databases accessible though the Internet and residing in the "My World" level 305 of Fig. 3 are not consulted.

Fig. 4 shows a scheme similar to Fig. 3, wherein the searcher represents the centre 401, and the following levels are distinguished: "My Family" or level 402, "My Friends" or level 403, "My Community" or level 404, and "My World" or level 405. The searcher is assumed to be looking for the same information as in Fig. 3 and thereto builds the same query. Instead of scoping the query to all data containers whose owner is closer related than a certain maximum level, the searcher now specifies a range, i.e. a minimum level 403 and a maximum level 404, for scoping the query. Only data containers whose proximity value is within this range will be searched. This way, the search efficiency is further optimized since further benefit is taken of the searcher's knowledge that the searched report is to be found amongst the data made available by his professional relations, and not by his friends and/or family. This is indicated by the marked zone in Fig. 4.

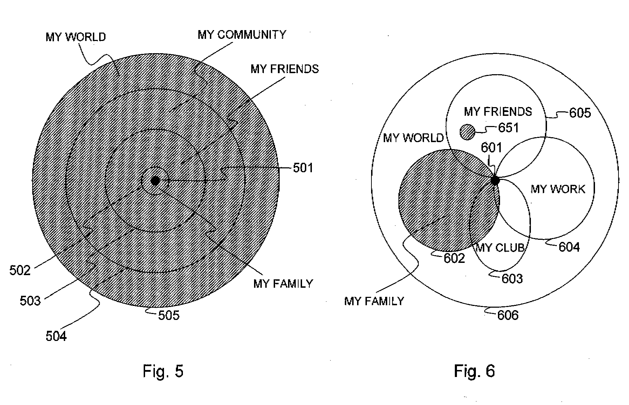

Fig. 5 shows a social network map similar to that of Fig. 3 and Fig. 4. The centre of the concentric map, representing the searcher himself, is denoted by 501. The successive proximity levels are again "My Family" denoted by 502, "My Friends" denoted by 503, "My Community" denoted by 504, and "My World" denoted by 505. To find information relating to the city of Prague where he is travelling to in July 2007, the searcher has built a query based on keywords such as "Prague", "Events", "July 2007", and the scope of the query is set to include all possible data sources available to the searcher. The searcher thereto selects the "My World" level 505 as the upper limit for scoping the query. As a result, the searcher may retrieve general information on Prague from the Internet, but in addition he may retrieve a set of pictures from a close friend or family member who has travelled through Prague.

Although proximity indexes can be grouped in levels as illustrated by the examples of Fig. 3, Fig. 4 and Fig. 5, the granularity of the proximity parameter or proximity index can go down to the level of a single relation between the searcher and data owner. Groups enable rough and fast scope defining, e.g. by selecting groups from a drag and drop list or by clicking buttons representing the different levels. Such rough scope definition may be extended with fine-tuning capabilities down to the data owner or data container level.

An example thereof is illustrated by Fig. 6. This figure shows a social network map wherein the searcher still represents the centre 601 of the map, but the groups are no longer represented by concentric circles in the map. "My Friends" now represents a zone 605 in the map wherein all data containers whose owner has a friendship relation to the searcher are positioned. The searcher's professional relations are put in the "My Work" zone 604, which shows overlap with the "My Friends" zone 605 since some of his friends may be colleagues and vice versa. Similarly, the map drawn in Fig. 6 shows a zone 602 or "My Family" for family members, a zone 603 or "My Club" for members of the movie club, and a zone 606 or "My World" where all available data containers form part of. The searcher, looking for pictures from a holiday in France, launches a search against the data containers containing data from the searcher's family members. The searcher thereto generates a query with keywords "France", "Holiday", "Picture", and scopes the query to the zone 602 of his social network map. The scope of the query is further fine-tuned to include also the data container 651 of a friend he met during this holiday in France, such that also pictures taken and kept by this friend are returned in response to the query. Instead of selecting the entire "My Friends" zone 605, the searcher thus optimally makes use of his knowledge where the searched pictures could be located, and scopes the query to find the searched pictures fastly thereby avoiding noise and avoiding inefficient use of resources in the network.

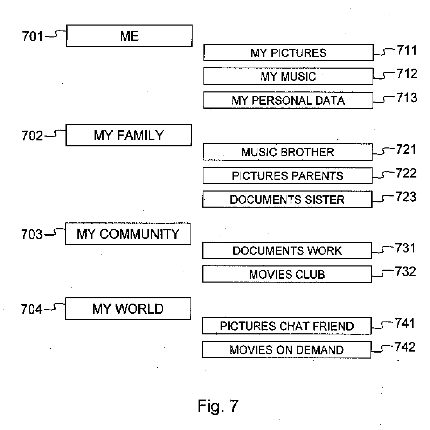

As already indicated above, the scope of the query may be defined through drag-and-drop lists, menu's, buttons, radio buttons, or other elements that form part of a user interface. An example of a list of available data sources and the proximity level where they belong to as it pops up in an exemplary graphical user interface is shown in Fig. 7. The proximity levels where the searcher can restrict the query to are "Me" or 701, "My Family" or 702, "My Community" or 703 and "My World" or 704. The searcher can broaden or limit the scope of the query by selecting or deselecting the predefined proximity levels 701, 702, 703 and 704. In addition, specific data containers can be marked / unmarked to fine-tune the scope against which the query will be launched. The 701 level for instance contains a first container "My Pictures" or 711, a second container "My Music" or 712, and a third container "My Personal Data" or 713. The second level 702 contains a fourth container "Music Brother" or 721, a fifth container "Pictures Parents" or 722, and a sixth container "Documents Sister" or 723. In the "My Community" level 703, a seventh container "Documents Work" or 731 and an eight container "Movies Club" or 732 have been classified. A ninth container "Pictures Chat Friend" or 741 and a tenth container "Movies on Demand" or 742 form part of the outer level 704. Via the graphical user interface, the searcher gets the list of available proximity levels and available data containers. Selection from a menu, clicking buttons or zones in a map, etc. will enable the searcher to scope the query before launching it.

Summarizing, whereas existing solutions do not enable scoping a query or at best enable scoping a query based on the characteristics or context of the searched data, the present invention enables the searcher to limit the scope of a search based on the relation between the data owner and the searcher, or more generally based on the location of the data containers within a proximity map of the searcher. The reliability of the retrieved data therefore can be matched to the relation between the searcher and data owner, and optimal advantage is taken of the searcher's knowledge of the location of the searched information resulting in reduced bandwidth and resource consumption in the network and the data sources, and in a generally faster response.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, a software algorithm or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences different from the one(s) described or illustrated above.

## Claims

1. A method for searching information in a data network, said method comprising the steps of:
a. constructing a context based query indicative for said information searched; and
b. launching said context based query against at least one data container (102) in said data network,
**CHARACTERIZED IN THAT** said method further comprises the steps of:
c. associating proximity parameter values with data containers in said data network;
d. defining a proximity criterion for data containers wherein the information has to be searched;
e. determining at least one data container (102) in said data network whose proximity parameter value satisfies said proximity criterion; and
f. launching said context based query only against said at least one data container (102) whose proximity parameter value satisfies said proximity criterion.

2. A method for searching information according to claim 1,
**CHARACTERIZED IN THAT** a proximity parameter value associated with a data container is determined on the basis of a relation between a data owner (203) of said data container and a searcher (202) of said information.

3. A method for searching information according to claim 2,
**CHARACTERIZED IN THAT** said relation corresponds to an emotional affinity between said data owner (203) and said searcher (202).

4. A method for searching information according to claim 2,
**CHARACTERIZED IN THAT** said relation corresponds to a behavioural affinity between said data owner (203) and said searcher (202).

5. A method for searching information according to claim 2,
**CHARACTERIZED IN THAT** said relation corresponds to a professional affinity between said data owner (203) and said searcher (202).

6. A method for searching information according to claim 2,
**CHARACTERIZED IN THAT** said relation corresponds to a physical affinity between said data owner (203) and said searcher (202).

7. A method for searching information according to claim 2,
**CHARACTERIZED IN THAT** said relation corresponds to a data usage pattern affinity between said data owner (203) and said searcher (202).

8. A method for searching information according to any one of claims 1 to 7,
**CHARACTERIZED IN THAT** said proximity parameter value corresponds to a numerical value either entered manually or automatically through an algorithm.

9. A method for searching information according to any one of claims 2 to 7,
**CHARACTERIZED IN THAT** said proximity parameter value corresponds to a position of said data owner (203) in a proximity map, either entered manually by said searcher (202) or automatically through an algorithm.

10. A method for searching information according to claim 9,
**CHARACTERIZED IN THAT** said proximity map corresponds to a concentric map wherein said searcher (202) represents the centre (301; 401; 501).

11. A method for searching information according to any of the preceding claims,
**CHARACTERIZED IN THAT** said proximity criterion comprises an upper limit for said proximity parameter value.

12. A method for searching information according to any of the preceding claims.
**CHARACTERIZED IN THAT** said proximity criterion comprises a range of acceptable values for said proximity parameter value.

13. A method for searching information according to any of the preceding claims,
**CHARACTERIZED IN THAT** said data network is a wide area network or a local area network or the world wide web.

14. A method for searching information according to any of the preceding claims.
**CHARACTERIZED IN THAT** said data network is a peer-to-peer network.

15. A computer-implemented system for searching information in a data network, said system comprising:
a. means for constructing a context based query indicative for said information searched; and
b. means for launching said context based query against at least one data container (102) in said data network,
**CHARACTERIZED IN THAT** said system further comprises:
c. means for associating proximity parameter values with data containers (102) in said data network;
d. means for defining a proximity criterion for data containers (102) wherein the information has to be searched;
e. means for determining at least one data container (102) in said data network whose proximity parameter value satisfies said proximity criterion; and
f. means for launching said context based query only against said at least one data container (102) whose proximity parameter value satisfies said proximity criterion.
